# EUROPÄISCHE PATENTSCHRIFT

(11) **EP 3 984 245 B1**
(45) Veröffentlichungstag und Bekanntmachung des Hinweises auf die Patenterteilung: **14.05.2025**
(21) Anmeldenummer: 20732177.9
(22) Anmeldetag: 08.06.2020
(51) Int. Cl.: H04R 1/28, B60R 11/02, B60R 13/08

(54) **DÄMPFUNGSEINRICHTUNG UND LAUTSPRECHERDÄMPFUNGSSYSTEM FÜR EIN KRAFTFAHRZEUG**
DAMPING DEVICE AND LOUDSPEAKER DAMPING SYSTEM FOR A MOTOR VEHICLE
DISPOSITIF D'AMORTISSEMENT ET SYSTÈME D'AMORTISSEMENT DE HAUT-PARLEUR POUR UN VÉHICULE À MOTEUR

(30) Priorität: 13.06.2019 DE 102019208660
(43) Veröffentlichungstag der Anmeldung: 20.04.2022
(73) Patentinhaber: Volkswagen Aktiengesellschaft, 38440 Wolfsburg (DE)
(72) Erfinder: KEYDEL, Toralf, 38162 Cremlingen (DE); JACHMANN, Christian, 38154 Königslutter (DE)
(86) Internationale Anmeldenummer: PCT/EP2020/065852
(87) Internationale Veröffentlichungsnummer: WO 2020/249516

(56) Entgegenhaltungen:
- EP-A1- 2 804 394
- DE-A1- 2 637 487
- DE-C1- 10 220 536
- US-B1- 8 739 921

## Beschreibung

Die Erfindung betrifft eine Dämpfungseinrichtung, insbesondere zur Dämpfung akustischer Schwingungen wie zum Beispiel eines Lautsprechers. Ferner betrifft die Erfindung ein Lautsprecherdämpfungssystem, welches eine erfindungsgemäße Dämpfungseinrichtung umfasst, sowie ein Kraftfahrzeug, welches eine erfindungsgemäße Dämpfungseinrichtung und/oder ein erfindungsgemäßes Lautsprecherdämpfungssystem umfasst.

In vielfältigen Bereichen werden Schaumstoffelemente zum Zweck der Dämpfung von Schwingungen, insbesondere akustischer Schwingungen, eingesetzt. Unter anderem werden Schäume in Kraftfahrzeugen eingesetzt, um beispielsweise Motorengeschräusche, Fahrbahngeräusche oder allgemein Außengeräusche so zu dämpfen, dass sie nicht oder nur stark abgeschwächt in den Fahrgastraum eindringen. Für die Integration von Schaumstoffteilen in Kraftfahrzeugen sind verschiedene Umsetzungen bekannt.

So zeigt die DE 100 16 758 A1 eine Tür eines Kraftfahrzeugs. Dabei ist zwischen der Außenwand der Kraftfahrzeugtür und der Innenwand ein Isolationselement in Form einer Schaumstofflage angeordnet. Die Schaumstofflage ist zwischen der Außenwand und der Innenwand eingeklemmt. Dazu bilden Außenwand und Innenwand einen Klemmbereich aus, welcher eine verschiedenartig gestaltbare Hinterschneidung umfasst, die mit der Schaumstofflage in Eingriff gebracht ist. Die Schaumstofflage weist dabei im Klemmbereich eine Verdickung auf.

Die DE 10 2005 009 179 A1 zeigt ebenfalls eine Kraftfahrzeugtür, bei der zwischen der Außenschale und der Türinnenverkleidung ein Modulbauteil angeordnet ist. Dabei ist vorgesehen, zwischen der Außenschale und dem Modulbauteil eine Dichtfolie in Form eines Schaumformteils anzuordnen. Diese dient der Schallisolierung sowie der Trennung in einen Nass- und einen Trockenbereich der Fahrzeugtür. Das Schaumformteil wird dabei ebenfalls eingeklemmt.

Die DE 10 2006 052 900 A1 zeigt ein schallabsorbierendes Bauteil zur Abdeckung von Teilen bzw. spezifischen Aggregaten eines Motors eines Kraftfahrzeugs. Dieses umfasst wenigstens abschnittsweise einen Schaumstoffkörper. Der Schaumstoffkörper wird mittels Hinterschneidungen an einer Kunststoffabdeckung befestigt oder an diese angeschäumt. Die DE 10 2006 052 900 A1 zeigt als konkrete Umsetzung hierfür pilzförmige Elemente, welche in den Schaumkörper eingeklipst werden.

DE 102 20 536 C1 zeigt eine weitere Lösung gemäß dem Stand der Technik.

Neben der allgemeinen akustischen Entkopplung des Fahrgastraums von störenden Fahrzeug- oder Außengeräuschen können geschäumte Körper auch dazu eingesetzt werden, Schallwellen lediglich in bestimmten Ausbreitungsrichtungen zu dämpfen. Dies ist zum Beispiel im Zusammenhang mit Lautsprechern bedeutsam, wie sie unter anderem in Türen von Kraftfahrzeugen typischerweise vorhanden sind. Das Ziel besteht hier darin, die Schallwellen in die gewünschte Ausbreitungsrichtung, nämlich in den Fahrgastraum hinein, nicht zu dämpfen, jedoch in alle anderen Richtungen maximal zu dämpfen. Nicht zuletzt soll vermieden werden, dass die Schallwellen andere Bauteile zum Schwingen anregen, wodurch unerwünschte Stör- bzw. Nebengeräusche erzeugt werden könnten. Insbesondere im Bereich von Lautsprechern ist es Stand der Technik, entsprechende geschäumte Körper in eine Aufnahme einzukleben. Diese Vorgehensweise ist mit Nachteilen im Hinblick auf Prozesszeiten, Umweltfreundlichkeit und Arbeitssicherheit verbunden. Eine weitere typische Methode besteht darin, den Schaumkörper mittels spezieller Geometrien einzuklemmen. Eine solche Verbindung kann jedoch leicht, beispielsweise schon durch Vibrationen, gelöst werden, so dass es unter Umständen bereits beim Transport der den Schaumkörper umfassenden baulichen Einheit zum Verlust des Schaumkörpers kommen kann. Bleibt dies im weiteren Montageprozess unbemerkt, fallen erhebliche Nacharbeitskosten an.

Der vorliegenden Erfindung liegt die Aufgabe zugrunde, eine Dämpfungseinrichtung, sowie ein Lautsprecherdämpfungssystem und ein Kraftfahrzeug zur Verfügung zu stellen, bei welchen in einfacher und kostengünstiger Weise eine optimale Beeinflussung der Schallwellen eines Lautsprechers realisierbar ist.

Die Aufgabe wird erfindungsgemäß gelöst durch eine Dämpfungseinrichtung gemäß Anspruch 1 sowie durch ein Lautsprecherdämpfungssystem gemäß Anspruch 7. Vorteilhafte Ausgestaltungsformen der Dämpfungseinrichtung werden in den Unteransprüchen 2-6 aufgezeigt. Ergänzend wird ein Kraftfahrzeug gemäß Anspruch 8 zur Verfügung gestellt,
welches wenigstens eine erfindungsgemäße Dämpfungseinrichtung und/oder ein erfindungsgemäßes Lautsprecherdämpfungssystem umfasst.

Ein erster Aspekt der Erfindung ist eine Dämpfungseinrichtung, insbesondere zur Dämpfung akustischer Schwingungen eines Lautsprechers, umfassend eine Aufnahmeeinrichtung zur Aufnahme eines Schaumkörpers. Dabei begrenzt die Aufnahmeeinrichtung zumindest bereichsweise einen Aufnahmeraum zur Aufnahme des Schaumkörpers. Ferner umfasst die erfindungsgemäße Dämpfungseinrichtung einen Schaumkörper zur Anordnung an oder in unmittelbarer Nähe zu einem Lautsprecher. Dabei ist der Schaumkörper im Aufnahmeraum der Aufnahmeeinrichtung angeordnet und an wenigstens einem der beiden Elemente Schaumkörper und Aufnahmeeinrichtung ein in Richtung auf das jeweils andere Element vorstehender Vorsprung angeordnet oder ausgebildet. Dieser greift in eine Vertiefung im jeweils anderen Element ein, so dass der Schaumkörper form- und/oder kraftschlüssig im Aufnahmeraum der Aufnahmeeinrichtung fixiert ist.

Dabei ist der Vorsprung an einer den Aufnahmeraum begrenzenden seitlichen Begrenzungswand der Aufnahmeeinrichtung angeordnet, und der Schaumkörper ist benachbart zur seitlichen Begrenzungswand in einer Anordnungsebene angeordnet, so dass der Vorsprung in den Schaumkörper diesen verformend hineinragt.

Unter einem Schaumkörper ist ein Körper aus einem geschäumten Material, typischerweise einem geschäumten Kunststoff, zu verstehen. Dabei ist nicht ausgeschlossen, dass in das geschäumte Material des Schaumkörpers Elemente aus einem anderen Material eingeschäumt sind und/oder mittels einer anderen form- und/oder kraftschlüssigen Verbindung mit diesem verbunden sind.

Die Aufnahmeeinrichtung dient der Aufnahme des Schaumkörpers. Das bedeutet, dass der Schaumkörper in einem Aufnahmeraum aufgenommen oder aufnehmbar ist, welcher zumindest bereichsweise durch die Aufnahmeeinrichtung, insbesondere durch Begrenzungswände der Aufnahmeeinrichtung, begrenzt ist. Zum anderen dient die Aufnahmeeinrichtung der Positionierung des Schaumkörpers in der unmittelbaren Umgebung eines Lautsprechers bzw. diesen Lautsprecher kontaktierend. Die Aufnahmeeinrichtung dient insbesondere der unmittelbaren Anordnung des Schaumkörpers am Lautsprecher und ist zur Anordnung an einer Verkleidung, insbesondere einer Innenverkleidung einer Kraftfahrzeugtür, eingerichtet und ist zweckmäßigerweise mit entsprechenden Befestigungsbereichen zur Befestigung an der Verkleidung ausgestattet.

Der Vorsprung ist zwischen sich gegenüberliegenden bzw. aneinander angrenzenden Seiten von Aufnahmeeinrichtung und Schaumkörper angeordnet oder ausgebildet. Dabei kann der Vorsprung eine bauliche Einheit mit dem Element ausbilden, an welchem er angeordnet ist. Alternativ kann der Vorsprung ein Bauteil sein, welches mit dem jeweiligen Element mechanisch verbunden ist.

Mit anderen Worten ist mittels des Vorsprungs ein Hakenelement ausgebildet, das als Fixierungseinrichtung zwischen dem Aufnahmeraum der Aufnahmeeinrichtung und dem Schaumkörper dient.

Zwecks Ausbildung der Dämpfungseinrichtung werden Aufnahmeeinrichtung und Schaumkörper in einem Fügevorgang miteinander gefügt. Dabei wird der Schaumkörper entlang, insbesondere parallel, wenigstens einer Begrenzungswand der Aufnahmeeinrichtung in den Aufnahmeraum eingeführt. Auf diese Weise werden Aufnahmeeinrichtung und Schaumkörper in einer Anordnungsebene im Wesentlichen nebeneinander angeordnet. Diese Anordnungsebene kann aufgrund der räumlichen Gestalt der Aufnahmeeinrichtung sowie des Schaumkörpers auch durch ein Volumen ausgebildet sein, welches durch zwei parallel zueinander ausgerichtete Begrenzungsebenen definiert ist, die winklig zu den Begrenzungswänden, und den Schaumkörper sowie die Aufnahmeeinrichtung bzw. dessen Aufnahmeraum abgrenzend verlaufen.

Die Fügerichtung ist dabei im Wesentlichen senkrecht zur Anordnungsebene ausgerichtet. Beim Fügevorgang wird ein Eingriff des Vorsprungs in eine Vertiefung realisiert.

Der Vorsprung greift in eine Vertiefung des jeweils anderen Elements ein, wobei die Vertiefung auch erst durch den Eingriff erzeugt werden kann. Ebenso kann das jeweils andere Element bereits von vornherein eine Vertiefung aufweisen. Insbesondere greift der an der Aufnahmeeinrichtung angeordnete Vorsprung in Poren des Schaumkörpers ein.

Die erfindungsgemäße Dämpfungseinrichtung realisiert auf einfache und kostengünstige Weise eine kraft- und/oder formschlüssige Verbindung zwischen einem Schaumkörper und einer Aufnahmeeinrichtung für einen Schaumkörper.

Mit anderen Worten bildet wenigstens eine seitliche Begrenzungswand der Aufnahmeeinrichtung wenigstens einen Vorsprung aus, welcher in den Schaumkörper hineinragt und diesen im Bereich des Eingriffs wenigstens teilweise verformt. Dabei ist nicht ausgeschlossen, dass die Verformung wenigstens teilweise irreversibel ist.

Der Schaumkörper ist benachbart zu besagter seitlicher Begrenzungswand der Aufnahmeeinrichtung in der Anordnungsebene angeordnet. Vorteilhafterweise berühren sich dabei die sich zugewandten Seiten der jeweiligen Elemente wenigstens bereichsweise.

Der Aufnahmeraum ist im Sinne der Erfindung ein Raum, welcher wenigstens teilweise durch seitliche Begrenzungen der Aufnahmeeinrichtung und durch jeweils eine zur Anordnungsebene parallele obere und dieser gegenüberliegend untere Begrenzungsebene definiert ist, wobei die Begrenzungsebenen nicht durch eine Wandung ausgebildet sein müssen, sondern den Aufnahmeraum insbesondere ideell begrenzen.

Das Material der Aufnahmeeinrichtung ist im Vergleich zum Schaumkörper weniger elastisch und/oder von höherer Festigkeit. Typischerweise handelt es sich bei der Aufnahmeeinrichtung um ein Kunststoffteil, welches mittels eines Spritzgussverfahrens erzeugt ist. Bevorzugt ist die Aufnahmeeinrichtung aus Polypropylen (PP) oder AcrylnitrilButadien-Styrol-Copolymere (ABS) gefertigt.

Typischerweise umfasst die Aufnahmeeinrichtung wenigstens zwei seitliche Begrenzungswände oder zumindest Abschnitte einer seitlichen Begrenzungswand, welche nicht in einer Ebene, vorteilhafterweise sich im Wesentlichen gegenüberliegend, angeordnet sind. Der wenigstens bereichsweise elastische Schaumkörper ist im Verhältnis zur Aufnahmeeinrichtung so dimensioniert, dass er bei bestimmungsgemäßer Anordnung in der Aufnahmeeinrichtung mit den Begrenzungswänden in Kontakt steht und die Rückstellkräfte des Schaumkörpers diesen gegen die Begrenzungswände der Aufnahmeeinrichtung drücken. Eine elastische Rückstellkraft des Schaumkörpers bewirkt dabei auch einen ständigen Druck des Vorsprungs an den Schaumkörper, so dass neben einer formschlüssigen Fixierung aufgrund des Eingreifens des Vorsprungs in den Schaumkörper bzw. in die dadurch im Schaumkörper erzeugte Vertiefung ebenfalls ein reibungsbedingter Kraftschluss zwischen Vorsprung und Schaumkörper realisiert ist.

Der Vorteil dieser Ausgestaltung besteht vor allem darin, dass der Vorsprung in den Schaumkörper eingreift. So wird auf besonders einfache, d.h. insbesondere einfach montierbare Weise, eine kraft- und formschlüssige Verbindung zwischen Schaumkörper und Aufnahmeeinrichtung realisiert.

In einer spezifischen Ausführungsform ist der Schaumkörper auf einer von einem zentralen Bereich der Aufnahmeeinrichtung abgewandten Seite einer seitlichen Begrenzungswand angeordnet. Im Fall einer ringförmigen Begrenzungswand bedeutet dies, dass der Schaumkörper am äußeren Umfang der ringförmigen Begrenzungswand angeordnet ist.

In anderen einer spezifischen Ausführungsform ist der Schaumkörper auf einer von einem zentralen Bereich der Aufnahmeeinrichtung zugewandten Seite einer seitlichen Begrenzungswand angeordnet. Im Fall einer ringförmigen Begrenzungswand bedeutet dies, dass der Schaumkörper am inneren Umfang der ringförmigen Begrenzungswand angeordnet ist.

In weiteren einer spezifischen Ausführungsform ist der Schaumkörper zwischen zwei Begrenzungswänden angeordnet, welche beispielsweise eine Nut ausbilden, in die der Schaumkörper eingeführt ist.

In einer weiteren Ausgestaltungsform der erfindungsgemäßen Dämpfungseinrichtung bilden Körperkanten des Vorsprungs wenigstens in einem in Richtung auf den Schaumkörper weisenden Endbereich einen ersten spitzen Winkel in einer ersten Ebene aus. Die erste Ebene ist dabei entlang der Längenerstreckung des Vorsprungs und im Wesentlichen senkrecht zu der seitlichen Begrenzungswand des Aufnahmeraums sowie im Wesentlichen senkrecht zur Anordnungsebene ausgerichtet.

Mit anderen Worten bildet der Vorsprung in einem Schnitt durch die Dämpfungseinrichtung in einer Ebene, die senkrecht zur seitlichen Begrenzungswand und Anordnungsebene aufgespannt wird und durch den Vorsprung verläuft, eine Spitze aus, welche wenigstens teilweise in den Schaumkörper hineinragt.

Der Endbereich des Vorsprungs ist beispielswiese das in Richtung der Längenerstreckung des Vorsprungs letzte Zehntel, wobei nicht ausgeschlossen ist, dass der Vorsprung auch über seine gesamte Längenerstreckung einen spitzen Winkel ausbildet.

Bei einer gewölbten Begrenzungswand ist die Ebene als senkrecht zu der Tangente an der Begrenzungswand zu verstehen, welche im rechten Winkel zur Längenerstreckung des Vorsprungs verläuft.

Unter einen spitzen Winkel ist ein Winkel von weniger als 90° zu verstehen. Bevorzugt ist der Winkel kleiner als 70°, besonders bevorzugt kleiner als 60°. Der Vorsprung bildet auf diese Art wenigstens in seinem Endbereich einen in Richtung des Schaumkörpers spitz zulaufenden Keil aus.

Durch die spitze Ausformung des Vorsprungs in dieser ersten Ebene kann der Vorsprung besonders gut in den Schaumkörper eindringen.

In einer weiteren Ausgestaltungsform der erfindungsgemäßen Dämpfungseinrichtung bilden die Körperkanten des Vorsprungs wenigstens in einem in Richtung auf den Schaumkörper weisenden Endbereich einen zweiten spitzen Winkel in einer zweiten Ebene aus. Dabei ist die zweite Ebene entlang der Längenerstreckung des Vorsprungs und im Wesentlichen senkrecht zu der seitlichen Begrenzungswand des Aufnahmeraums, sowie im Wesentlichen parallel zur Anordnungsebene ausgerichtet.

Mit anderen Worten bildet der Vorsprung bzw. dessen Körperkanten vorteilhafterweise in einer zur ersten Ebene senkrechten zweiten Ebene, welche sich ebenfalls entlang der Längenerstreckung des Vorsprungs erstreckt, ebenfalls einen spitzen Winkel aus. Auch dieser zweite spitze Winkel wird zumindest im Endbereich des Vorsprungs ausgebildet, wobei auch für den zweiten spitzen Winkel nicht ausgeschlossen ist, dass dieser über die gesamte Längenerstreckung des Vorsprungs ausgebildet ist.

Ausgehend von einer rechteckigen Grundfläche des Vorsprungs, welche im Wesentlichen die Fläche ist, mit der Vorsprung an die seitliche Begrenzungswand anschließt, hat der Vorsprung im Wesentlichen eine pyramidale Form, wobei nicht zwingend alle Körperkanten denselben Winkel ausbilden. Ausgehend von einer runden oder ovalen Grundfläche hat der Vorsprung in Wesentlichen die Form eines Kegels bzw. eines Dorns.

Ein in dieser Art gestalteter Vorsprung dringt besonders gut in den Schaumkörper, insbesondere in die Poren eines Schaumkörpers ein, zwecks Ausbildung einer form- und kraftschlüssigen Verbindung.

In einer weiteren Ausgestaltungsform der erfindungsgemäßen Dämpfungseinrichtung sind mehrere Vorsprünge wenigstens an einer seitlichen Begrenzungswand des Aufnahmeraums angeordnet.

Wenigstens umfasst die Dämpfungseinrichtung in dieser Ausführungsform zwei Vorsprünge, welche vorteilhafter- aber nicht zwingenderweise gegenüberliegend angeordnet sind. Mehrere Vorsprünge können auch in Gruppen angeordnet sein, wobei eine Gruppe von Vorsprüngen meint, dass zwei oder mehr Vorsprünge räumlich dichter zueinander angeordnet sind als die zu der Gruppe benachbarten Vorsprünge. Bevorzugt sind die Vorsprünge bzw. die Gruppen von Vorsprüngen regelmäßig, insbesondere äquidistant, an der seitlichen Begrenzungswand, zu welcher der Schaumkörper benachbart angeordnet ist, verteilt. Regelmäßig bedeutet im Sinne der Erfindung, dass ihre Verteilung einem Algorithmus folgt und nicht zufällig ist.

Dabei sind die Vorsprünge an der den Aufnahmeraum begrenzenden seitlichen Begrenzungswand in wenigstens einer zur Anordnungsebene im Wesentlichen parallelen Ebene verteilt. Es ist ebenso möglich, dass Vorsprünge in mehreren parallelen Ebenen angeordnet sind.

In einer spezifischen Ausführungsform ist der Schaumkörper vorzugsweise ringförmig. Die Aufnahmeeinrichtung bildet eine zur Form des Schaumkörpers kompatible Hohlform als Aufnahmeraum aus. Bei bestimmungsgemäßer Anordnung des Schaumkörpers in der Aufnahmeeinrichtung sind an wenigstens einer, bevorzugt beiden, seitlichen Begrenzungswänden, zu denen der Schaumkörper benachbart ist, Vorsprünge in regelmäßigen Abständen angeordnet, so dass in zwei sich gegenüberliegenden Seiten des Schaumkörpers jeweils Vorsprünge hineinragen.

Anderer Formen des Schaumkörpers und entsprechend der Form kompatible Ausgestaltungen des Aufnahmeraums sind nicht ausgeschlossen.

Der Vorteil mehrerer Vorsprünge besteht in einer besseren mechanischen Fixierung des Schaumkörpers im Aufnahmeraum.

In einer weiteren Ausgestaltungsform der erfindungsgemäßen Dämpfungseinrichtung ist zwecks Erleichterung der Entformung der Aufnahmeeinrichtung aus einer Gussform dem Vorsprung gegenüberliegend eine Aussparung angeordnet. Dabei ist die Aussparung in einer zur Anordnungsebene im Wesentlichen parallel angeordneten Bodenfläche der Aufnahmeeinrichtung angeordnet, welche wenigstens abschnittsweise eine Abstützebene definiert.

Die Bodenfläche kann dabei gewölbt sein. Insbesondere kann die Bodenfläche in ihrer Ausgestaltung an die Gestalt der ihr gegenüberliegenden Seite des Schaumkörpers angepasst sein.

Der Fügevorgang findet in Richtung auf die Bodenfläche statt. Die Bodenfläche fungiert dabei abschnittsweise insbesondere beim Fügevorgang als Abstützebene. Dabei begrenzt die Bodenfläche den Fügevorgang, wobei der Schaumkörper nach Abschluss des Fügevorgangs in der Dämpfungseinrichtung nicht zwingend dauerhaft auf der Bodenfläche aufliegen muss.

Die Aussparung dient in erster Linie der Herstellung der Aufnahmeeinrichtung und der Entformung dieser aus einer Gussform, wobei es sich bei der Aufnahmeeinrichtung vorzugsweise um ein Spritzgussteil handelt, welches kostensparend in einem einfachen Auf-Zu-Werkzeug herstellbar ist. Die Aussparungen sind unterhalb der Vorsprünge angeordnet, so dass ein zur Herstellung einer Hinterschneidung erforderlicher Schieber nicht benötigt wird.

Es ist nicht ausgeschlossen, dass es sich bei der Aufnahmeeinrichtung um ein Mehrkomponentenbauteil handelt, in welches beispielsweise Befestigungsmittel und/oder Versteifungselemente aus einem anderen Werkstoff eingespritzt sind. Insbesondere ist es möglich, dass die Vorsprünge der erfindungsgemäßen Dämpfungseinrichtung in das Bauteil eingespritzt sind.

In einer weiteren Ausgestaltungsform der erfindungsgemäßen Dämpfungseinrichtung bildet die von einer zur Anordnungsebene im Wesentlichen parallel angeordneten Bodenfläche der Aufnahmeeinrichtung abgewandte Seite des Vorsprungs mit der seitlichen Begrenzungswand, an der der Vorsprung angeordnet ist, einen stumpfen Winkel aus zwecks Erleichterung des Einfügens des Schaumkörpers in den Aufnahmeraum.

Mit anderen Worten ist zwischen der seitlichen Begrenzungswand und dem Vorsprung in der ersten Ebene ein stumpfer Winkel realisiert. Unter einem stumpfen Winkel ist ein Winkel von mehr als 90° zu verstehen, wobei der Winkel bevorzugt größer als 110°, besonders bevorzugt größer 130° ist.

Das Einfügen erfolgt vorteilhafterweise im Wesentlichen senkrecht zur Anordnungsebene in Richtung auf die Bodenfläche in den Aufnahmeraum. Der Schaumkörper kann beim Fügevorgang an den Kanten oder Flächen des Vorsprungs, die den stumpfen Winkel ausbilden, entlang gleiten. Dabei wird der Schaumkörper verformt, aber im Wesentlichen nicht beschädigt.

Auf diese Art wird das Verletzungsrisiko bei der Handhabung der Aufnahmeeinrichtung, insbesondere bei einer händischen Montage des Schaumkörpers in die Aufnahmeeinrichtung, minimiert, da die Spitze des Vorsprungs vom Monteur weggerichtet ist. Ferner wird das Einschieben des Schaums in die Aufnahmeeinrichtung erleichtert und ein Herausrutschen entgegen der Fügerichtung wenigstens teilweise blockiert.

In einer weiteren Ausgestaltungsform der erfindungsgemäßen Dämpfungseinrichtung bildet die von einer zur Anordnungsebene im Wesentlichen parallel angeordneten Bodenfläche der Aufnahmeeinrichtung zugewandte Seite des Vorsprungs mit der seitlichen Begrenzungswand, an der der Vorsprung angeordnet ist, einen spitzen Winkel aus zwecks Realisierung einer Hinterschneidung, welche einer Entfernung des Schaumkörpers aus dem Aufnahmeraum entgegenwirkt.

Mit anderen Worten wird ein Entfernen des Schaumkörpers, insbesondere ein unbeabsichtigtes Entfernen durch die im spitzen Winkel ausgebildete Hinterschneidung, blockiert.

Damit ist sichergestellt, dass der Schaumkörper nicht während des Transports der Dämpfungseinrichtung zwischen zwei Montagestationen unbemerkt verloren gehen kann. Ein bei der weiteren Montage unbemerktes Fehlen des Schaumkörpers ist gegebenenfalls mit hohem Nacharbeitsaufwand verbunden, welcher mit dieser Ausgestaltung weitestgehend vermieden werden kann.

In einer weiteren Ausgestaltungsform der erfindungsgemäßen Dämpfungseinrichtung beträgt der Druckverformungsrest des Materials des Schaumkörpers weniger als 15%, bevorzugt weniger als 10 %, besonders bevorzugt weniger als 5%.

Ferner beträgt die Stauchhärte des Materials des Schaumkörpers bevorzugt 4 +/- 2 kPa, besonders bevorzugt 4 +/- 1kPa. Die Stauchhärte ist ein Maß für die Festigkeit von Schäumen und wird bestimmt nach DIN EN ISO 3386-1. Es wird dabei die Kraft ermittelt, welche erforderlich ist, um die ursprüngliche Höhe eines Prüfkörpers um 40% zusammenzudrücken.

Bevorzugt handelt es sich bei dem Material des Schaumkörpers im Wesentlichen um geschäumtes Polyurethan, wobei ein anderer schäumbarer Kunstsoff nicht ausgeschlossen ist.

Vorteilhafterweise weist der Schaumkörper insbesondere an der Seite, an welcher die form- und/oder kraftschlüssige Verbindung ausgebildet ist, keine sogenannte Haut auf. Mit anderen Worten ist der Schaumkörper auf seiner dem Vorsprung zugewandten Seite offenporig.

Die Rohdichte des geschäumten Materials, aus dem der Schaumkörper im Wesentlichen ausgebildet ist, beträgt gemessen gemäß DIN EN ISO 845 bevorzugt 28 +/- 10 kg/m³, besonders bevorzugt 28 +/- 5 kg/m³.

Die Bruchdehnung des geschäumten Materials, aus dem der Schaumkörper im Wesentlichen ausgebildet ist, liegt ermittelt nach DIN EN ISO 1798 bevorzugt bei mehr als 100%.

Die Zugfestigkeit des geschäumten Materials, aus dem der Schaumkörper im Wesentlichen ausgebildet ist, liegt ermittelt nach DIN EN ISO 1798 bevorzugt bei mehr als 70%, besonders bevorzugt bei mehr als 80%.

Ein zweiter Aspekt der Erfindung ist ein Lautsprecherdämpfungssystem, umfassend eine erfindungsgemäße Dämpfungseinrichtung sowie einen Lautsprecher, der in einem Umfangsbereich von dem Schaumkörper zumindest abschnittsweise umgeben ist.

Ein weiterer Bestandteil des Lautsprecherdämpfungssystems kann eine Verkleidung sein, wie zum Beispiel eine Türverkleidung, an deren Innenseite, die dem Fahrgastraum abgewandt ist, eine erfindungsgemäße Dämpfungseinrichtung angeordnet bzw. ausgebildet ist.

Insbesondere dringt der Lautsprecher mit einem Umfangsbereich wenigstens abschnittsweise in den Schaumkörper ein, wobei der Schaumkörper verformt wird. Der Umfangsbereich des Lautsprechers dringt dabei wenigstens 1 mm, bevorzugt wenigstens 2 mm, besonders bevorzugt wenigstens 4 mm in den Schaumkörper ein.

Bevorzugt umfasst die Aufnahmeeinrichtung zwecks Ausbildung der mechanischen Verbindung mit einem tragenden Element, wie zum Beispiel einer Türverkleidung, Verbindungsbereiche.

Das Brandverhalten des geschäumten Materials, welches den Schaumkörper ausbildet, ist nach FMVSS302 durch eine Brennrate von weniger als 120 mm/min, bevorzugt weniger als 75 mm/min ab einer Materialstärke von 1,5 mm charakterisiert. Ein solches Brandverhalten ist erforderlich in Verbindung mit der Verwendung von derartigen Materialien in Kraftfahrzeugen, insbesondere in Verbindung mit elektrischen Geräten.

Der Vorteil des erfindungsgemäßen Lautsprecherdämpfungssystems besteht in der Bereitstellung einer Einheit, die einen Lautsprecher und eine Dämpfungseinrichtung miteinander kombiniert.

Ein weiterer Aspekt der Erfindung ist ein Kraftfahrzeug, umfassend wenigstens eine an einer Verkleidung des Kraftfahrzeugs, insbesondere der Verkleidung einer Fahrzeugtür, befestigte oder von einer derartigen Verkleidung ausgebildete erfindungsgemäße Dämpfungseinrichtung und/oder wenigstens ein erfindungsgemäßes Lautsprecherdämpfungssystem.

Die Dämpfungseinrichtung ist dabei z.B. an einer Verkleidung, wie zwischen an einer Türverkleidung an deren Innenseite angeordnet, oder die Dämpfungseinrichtung von der Verkleidung ausgebildet. Der Lautsprecher ist in beiden Fällen an einer Tragstruktur, wie zum Beispiel der Tragstruktur einer Fahrzeugtür, angeordnet.

Bei bestimmungsgemäßer Positionierung der Türverkleidung auf einer derartigen Tragstruktur einer Fahrzeugtür wird die Dämpfungseinrichtung derart positioniert, dass der Schaumkörper den Lautsprecher im Wesentlichen in einer Ebene umgibt.

Grundsätzlich ist es nicht ausgeschlossen, dass die erfindungsgemäße Dämpfungseinrichtung und/oder das erfindungsgemäße Lautsprecherdämpfungssystem auch an anderen Strukturen eines Kraftfahrzeugs als an einer Türverkleidung bzw. der Tragstruktur einer Fahrzeugtür installiert ist.

Bevorzugt umfasst die Aufnahmeeinrichtung zwecks Ausbildung der mechanischen Verbindung mit der Verkleidung abschnittsweise zu diesem Zweck ausgestaltete Verbindungsbereiche.

Die Erfindung wird im Folgenden anhand des in den beiliegenden Zeichnungen dargestellten Ausführungsbeispiels erläutert.

Es zeigen
Fig. 1: eine Ausgestaltungsform der erfindungsgemäßen Dämpfungseinrichtung in einem Schnitt senkrecht zur Anordnungsebene;
Fig. 2: ein Detail der Ausgestaltungsform der erfindungsgemäßen Dämpfungseinrichtung gemäß Figur 1;
Fig. 3: eine Ausgestaltungsform der Aufnahmeeinrichtung zur Aufnahme des Schaumkörpers in dreidimensionaler Ansicht;
Fig. 4: ein Detail der Ausgestaltungsform der Aufnahmeeinrichtung gemäß Figur 3 sowie
Fig. 5: eine Ausgestaltungsform des erfindungsgemäßen Lautsprecherdämpfungssystems in einem Schnitt senkrecht zur Anordnungsebene.

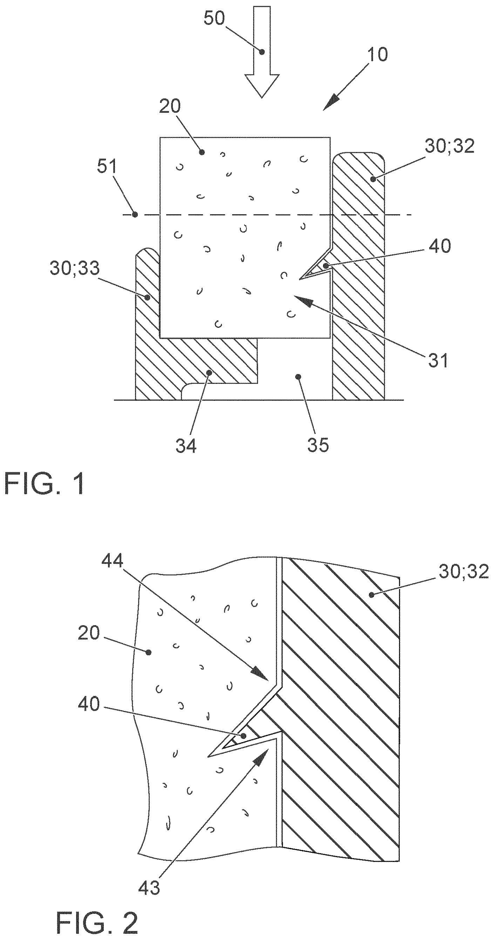

Figur 1 zeigt eine Ausgestaltungsform der erfindungsgemäßen Dämpfungseinrichtung 10. Dargestellt ist die Dämpfungseinrichtung 10 in einem Schnitt senkrecht zur Anordnungsebene 51 entlang der Fügerichtung 50, in der der Schaumkörper 20 mit der Aufnahmeeinrichtung 30 gefügt wird. In der Darstellung gemäß Figur 1 wird der Schaumkörper 20 von oben in den Aufnahmeraum der Aufnahmeeinrichtung 30 eingeführt. Der Aufnahmeraum 31 ist im Wesentlichen durch drei Seiten begrenzt, nämlich durch die erste seitliche Begrenzungswand 32, die zweite seitliche Begrenzungswand 33, welche der ersten seitlichen Begrenzungswand 32 im Wesentlichen gegenüberliegt, und die Bodenfläche 34, welche den Aufnahmeraum 31 entlang der Fügerichtung 50 nach unten begrenzt. Die beiden seitlichen Begrenzungswände 32, 33 verjüngen sich in Richtung der Bodenfläche 34 leicht, was der Entformung der Aufnahmeeinrichtung 30 aus ihrem Herstellungswerkzeug, typischerweise einem Spritzgusswerkzeug, dient.

An der ersten seitlichen Begrenzungswand 32 ist ein Vorsprung 40 angeordnet, welcher in Richtung auf den Schaumkörper 20 in der Ebene der Darstellung, welche der ersten Ebene entspricht, einen spitzen Winkel ausbildet. Der Vorsprung 40 ragt erkennbar in den Schaumkörper 20 hinein.

Dem Vorsprung 40 gegenüberliegend weist die Bodenfläche 34 eine Aussparung 35 auf. Diese Aussparung 35 dient ebenfalls in erster Linie der Entformung der Aufnahmeeinrichtung 30 aus ihrem Herstellungswerkzeug.

Hier nicht dargestellt ist die Porosität des Schaumkörpers 20, welcher insbesondere in Richtung der Vorsprünge 40 offenporig ist. Mit anderen Worten ist die zur seitlichen Begrenzungswand 32 benachbarte Oberfläche des Schaumkörpers 20 nicht glatt. Die Spitze des Vorsprungs 40 dringt beim Fügevorgang in die Poren den Schaumkörpers 20 ein.

Figur 2 zeigt ein Detail der Ausgestaltungsform der erfindungsgemäßen Dämpfungseinrichtung 10 gemäß Figur 1 und verdeutlicht die spezifische Ausgestaltung des Vorsprungs 40. Es ist zu erkennen, dass der Vorsprung 40 mit der ersten seitlichen Begrenzungswand 32 an seiner oberen Seite, also der der Bodenfläche 34 abgewandten Seite, einen stumpfen Winkel 44 ausbildet, wohingegen der Vorsprung 40 an seiner unteren, gegenüberliegenden Seite einen spitzen Winkel 43 ausbildet. Auf diese Art ist eine Hinterschneidung realisiert, welche ein einfaches Einfügen des Schaumkörpers 20 von oben ermöglicht und gleichzeitig einem unbeabsichtigten Entfernen des Schaumkörpers 20 entgegenwirkt.

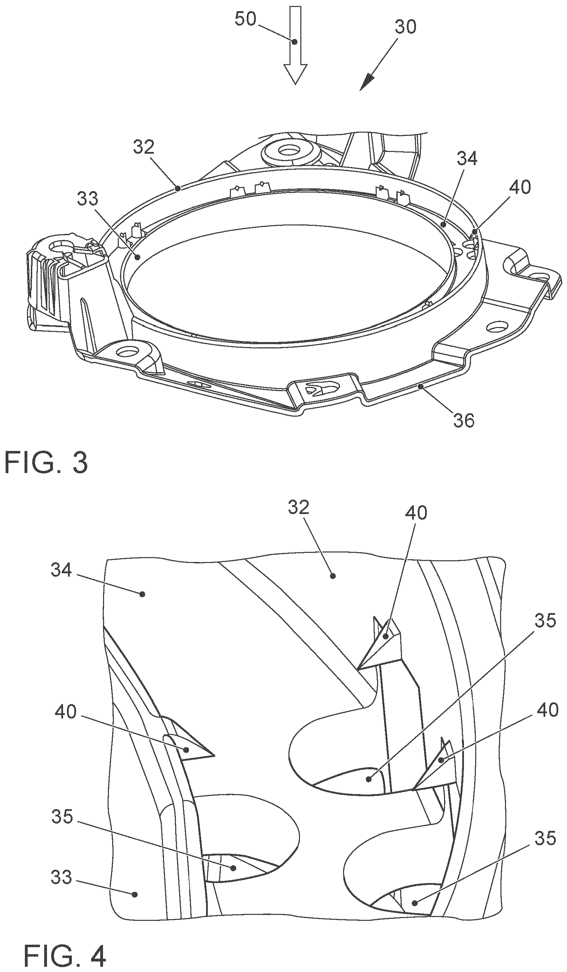

Figur 3 zeigt eine spezifische Ausgestaltungsform der Aufnahmeeinrichtung 30 zur Aufnahme des Schaumkörpers 20 in dreidimensionaler Ansicht. In der dargestellten Ausführungsform ist der Aufnahmeraum 31 der Aufnahmeeinrichtung 30 ringförmig gestaltet. Entsprechend dient er zur Aufnahme im Wesentlichen ringförmiger Schaumkörper 20. Es ist zu erkennen, dass sowohl an der ersten seitlichen Begrenzungswand 32 als auch an der zweiten seitlichen Begrenzungswand 33 Vorsprünge 40 angeordnet sind, wobei an der ersten seitlichen Begrenzungswand 32 jeweils zwei Vorsprünge 40 eine Gruppe bilden. Die Vorsprünge 40 bzw. die Gruppen von Vorsprüngen 40 sind regelmäßig und im Wesentlichen äquidistant über den Umfang verteilt.

Die Aussparungen im Randbereich 36 der Aufnahmeeinrichtung 30 dienen der Fixierung der Aufnahmeeinrichtung 30 an einer Tragstruktur, insbesondere einer Innenverkleidung einer Kraftfahrzeugtür. Es ist vorgesehen, dass ein Lautsprecher 60 in Fügerichtung 50 auf den im Aufnahmeraum 31 befindlichen Schaumkörper 20 aufgesetzt wird. Dies erfolgt bei einer Montagebewegung einer Tür- Innenverkleidung, an der die Aufnahmeeinrichtung 30 mit darin integrierten Schaumkörper angeordnet ist, wobei der Lautsprecher an einer Tragstruktur der Tür selbst befestigt ist. In einer Kraftfahrzeugtür eingebaut ist an der darstellungsgemäßen Unterseite der Aufnahmeeinrichtung 30 das Lautsprechergitter angeordnet.

Figur 4 zeigt ein Detail der Ausgestaltungsform der Aufnahmeeinrichtung 30 gemäß Figur 3. Zu erkennen sind hier drei Vorsprünge 40, angeordnet an den beiden seitlichen Begrenzungswänden 32, 33, sowie die ihnen jeweils gegenüberliegenden Aussparungen 35 in der Bodenfläche 34. Die dreidimensionale Ansicht zeigt, dass die Vorsprünge 40 derart ausgeführt sind, dass sie auf ihrer auf die jeweilige seitliche Begrenzungswand 32, 33 zuweisenden Seite eine in Wesentlichen rechteckige Grundfläche aufweisen, von welcher aus die Körperkanten nach Art einer Pyramide spitz entlang der Längenerstreckungsrichtung des Vorsprungs 40 zulaufen. In einer alternativen Ausgestaltungsform kann auch ein Dorn mit einer runden oder ovalen Grundfläche realisiert sein. Es ist dabei in keiner Weise zwingend, dass die Verjüngung des Vorsprungs 40 über die näherungsweise gesamte Längenerstreckung des Vorsprungs 40 realisiert ist.

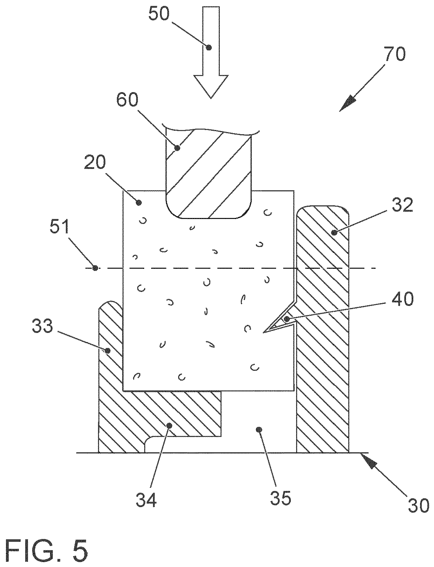

Figur 5 zeigt schematisch eine Ausgestaltungsform des erfindungsgemäßen Lautsprecherdämpfungssystems 70. Der Randbereich eines Lautsprechers 60 ist hier auf den Schaumkörper 20 aufgesetzt und dringt in dieser spezifischen Ausgestaltung wenige Millimeter in den Schaumkörper 20 ein, welcher entsprechend elastisch verformbar ist.

Der Schaumkörper 20 dämpft somit den Anteil der Schallwellen, welcher vom Lautsprecher in Richtung beispielsweise eines Türinnenraums abgegeben wird, so dass Störgeräusche reduziert bzw. vermieden werden.

### Bezugszeichenliste

- 10: Dämpfungseinrichtung
- 20: Schaumkörper
- 30: Aufnahmeeinrichtung
- 31: Aufnahmeraum
- 32: erste seitliche Begrenzungswand
- 33: zweite seitliche Begrenzungswand
- 34: Bodenfläche
- 35: Aussparung
- 36: Randbereich
- 40: Vorsprung
- 43: spitzer Winkel
- 44: stumpfer Winkel
- 50: Fügerichtung
- 51: Anordnungsebene
- 60: Lautsprecher
- 70: Lautsprecherdämpfungssystem

## Patentansprüche

1. Dämpfungseinrichtung (10), insbesondere zur Dämpfung akustischer Schwingungen eines Lautsprechers (60), umfassend eine Aufnahmeeinrichtung (30) zur Aufnahme eines Schaumkörpers (20), wobei die Aufnahmeeinrichtung (30) zumindest bereichsweise einen Aufnahmeraum (31) zur Aufnahme des Schaumkörpers (20) begrenzt, sowie einen Schaumkörper (20) zur Anordnung an oder in unmittelbarer Nähe zu einem Lautsprecher (60), wobei der Schaumkörper (20) im Aufnahmeraum (31) der Aufnahmeeinrichtung (30) angeordnet ist und an wenigstens einem der beiden Elemente Schaumkörper (20) und Aufnahmeeinrichtung (30) ein in Richtung auf das jeweils andere Element vorstehender Vorsprung (40) angeordnet oder ausgebildet ist, der in eine Vertiefung im jeweils anderen Element eingreift, so dass der Schaumkörper (20) form- und/oder kraftschlüssig im Aufnahmeraum (31) der Aufnahmeeinrichtung (30) fixiert ist, wobei der Vorsprung (40) an einer den Aufnahmeraum (31) begrenzenden seitlichen Begrenzungswand (32, 33) der Aufnahmeeinrichtung (30) angeordnet ist und der Schaumkörper (20) benachbart zur seitlichen Begrenzungswand (32, 33) in einer Anordnungsebene (51) angeordnet ist, so dass der Vorsprung (40) verformend in den Schaumkörper (20) hineinragt, **dadurch gekennzeichnet, dass** die Körperkanten des Vorsprungs (40) wenigstens in einem in Richtung auf den Schaumkörper (20) weisenden Endbereich einen zweiten spitzen Winkel in einer zweiten Ebene, die entlang der Längenerstreckung des Vorsprungs (40) und im Wesentlichen senkrecht zu der seitlichen Begrenzungswand (32, 33) des Aufnahmeraums (31) sowie im Wesentlichen parallel zur Anordnungsebene (51) ausgerichtet ist, ausbilden.

2. Dämpfungseinrichtung (10) nach dem vorhergehenden Anspruch, **dadurch gekennzeichnet, dass** Körperkanten des Vorsprungs (40) wenigstens in einem in Richtung auf den Schaumkörper (20) weisenden Endbereich einen ersten spitzen Winkel in einer ersten Ebene ausbilden, die entlang der Längenerstreckung des Vorsprungs (40) und im Wesentlichen senkrecht zu der seitlichen Begrenzungswand (32, 33) des Aufnahmeraums (31) sowie im Wesentlichen senkrecht zur Anordnungsebene (51) ausgerichtet ist.

3. Dämpfungseinrichtung (10) nach einem der vorhergehenden Ansprüche, **dadurch gekennzeichnet, dass** mehrere Vorsprünge (40) wenigstens an einer seitlichen Begrenzungswand (32, 33) des Aufnahmeraums (31) angeordnet sind.

4. Dämpfungseinrichtung (10) nach einem der vorhergehenden Ansprüche, **dadurch gekennzeichnet, dass** in einer zur Anordnungsebene (51) im Wesentlichen parallel angeordneten Bodenfläche (34) der Aufnahmeeinrichtung (30), welche wenigstens abschnittsweise eine Abstützebene definiert, dem Vorsprung (40) gegenüberliegend zwecks Erleichterung der Entformung der Aufnahmeeinrichtung aus einer Gussform eine Aussparung (35) angeordnet ist.

5. Dämpfungseinrichtung (10) nach einem der vorhergehenden Ansprüche, **dadurch gekennzeichnet, dass** die von einer zur Anordnungsebene (51) im Wesentlichen parallel angeordneten Bodenfläche (34) der Aufnahmeeinrichtung (30) abgewandte Seite des Vorsprungs (40) mit der seitlichen Begrenzungswand (32, 33), an der der Vorsprung (40) angeordnet ist, einen stumpfen Winkel (44) zwecks Erleichterung des Einfügens des Schaumkörpers (20) in den Aufnahmeraum (31) ausbildet.

6. Dämpfungseinrichtung (10) nach einem der vorhergehenden Ansprüche, **dadurch gekennzeichnet, dass** die von einer zur Anordnungsebene (51) im Wesentlichen parallel angeordneten Bodenfläche (34) der Aufnahmeeinrichtung (30) zugewandte Seite des Vorsprungs (40) mit der seitlichen Begrenzungswand(32, 33), an der der Vorsprung (40) angeordnet ist, einen spitzen Winkel (43) ausbildet zwecks Realisierung einer Hinterschneidung, welche einer Entfernung des Schaumkörpers (20) aus dem Aufnahmeraum (31) entgegenwirkt.

7. Lautsprecherdämpfungssystem (70), umfassend eine Dämpfungseinrichtung (10) gemäß einem der vorhergehenden Ansprüche sowie einen Lautsprecher (60), der in einem Umfangsbereich von dem Schaumkörper (20) zumindest abschnittsweise umgeben ist.

8. Kraftfahrzeug, umfassend wenigstens eine an einer Verkleidung des Kraftfahrzeugs, insbesondere an der Verkleidung einer Fahrzeugtür, befestigte oder von einer derartigen Verkleidung ausgebildete Dämpfungseinrichtung (10) gemäß einem der Ansprüche 1-6 oder wenigstens ein Lautsprecherdämpfungssystem (70) gemäß Anspruch 7.

## Claims

1. Damping device (10), in particular for damping acoustic vibrations of a loudspeaker (60), comprising a receiving device (30) for receiving a foam body (20), the receiving device (30) delimiting, at least in regions, a receiving space (31) for receiving the foam body (20), and comprising a foam body (20) for arrangement on or in the immediate vicinity of a loudspeaker (60), the foam body (20) being arranged in the receiving space (31) of the receiving device (30), and a projection (40) being arranged or formed on at least one of the two elements, the foam body (20) and the receiving device (30), which projection protrudes in the direction of the other element and engages in an indentation in the other element, so that the foam body (20) is fixed in the receiving space (31) of the receiving device (30) in a form-fitting and/or force-fitting matter, the projection (40) being arranged on a lateral delimiting wall (32, 33) of the receiving device (30), which delimits the receiving space (31), and the foam body (20) being arranged adjacent to the lateral delimiting wall (32, 33) in an arrangement plane (51), so that the projection (40) protrudes in a deforming manner into the foam body **(20),characterized in that** the body edges of the projection (40), at least in an end region pointing toward the foam body (20), form a second acute angle in a second plane which is oriented along the longitudinal extension of the projection (40), substantially perpendicularly to the lateral delimiting wall (32, 33) of the receiving space (31), and substantially in parallel with the arrangement plane (51).

2. Damping device (10) according to the preceding claim,
**characterized in that** body edges of the projection (40) form, at least in an end region pointing toward the foam body (20), a first acute angle in a first plane which is oriented along the longitudinal extension of the projection (40), substantially perpendicularly to the lateral delimiting wall (32 33) of the receiving space (31), and substantially perpendicularly to the arrangement plane (51).

3. Damping device (10) according to either of the preceding claims,
**characterized in that** a plurality of projections (40) are arranged on least on one lateral delimiting wall (32, 33) of the receiving space (31).

4. Damping device (10) according to any of the preceding claims,
**characterized in that**, in a bottom surface (34) of the receiving device (30), which is arranged substantially in parallel with the arrangement plane (51) and which defines, at least in portions, a support plane, a recess (35) is arranged opposite the projection (40) in order to facilitate the demolding of the receiving device from a casting mold.

5. Damping device (10) according to any of the preceding claims,
**characterized in that** the face of the projection (40) that faces away from a bottom surface (34) of the receiving device (30), which is arranged substantially in parallel with the arrangement plane (51), forms an obtuse angle (44) with the lateral delimiting wall (32, 33) on which the projection (40) is arranged, in order to facilitate the insertion of the foam body (20) into the receiving space (31).

6. Damping device (10) according to any of the preceding claims,
**characterized in that** the face of the projection (40) that faces toward a bottom surface (34) of the receiving device (30), which is arranged substantially in parallel with the arrangement plane (51), forms an acute angle (43) with the lateral delimiting wall (32, 33) on which the projection (40) is arranged, in order to provide an undercut which counteracts a removal of the foam body (20) from the receiving space (31).

7. Loudspeaker damping system (70) comprising a damping device (10) according to any of the preceding claims and a loudspeaker (60) which is surrounded, at least in portions, by the foam body (20) in a peripheral region.

8. Motor vehicle comprising at least one damping device (10) according to any of claims 1-6 which is fastened to a panel of the motor vehicle, in particular to the panel of a vehicle door, or is formed by such a panel, or comprising at least one loudspeaker damping system (70) according to claim 7.

## Revendications

1. Dispositif d'amortissement (10), en particulier pour l'amortissement de vibrations acoustiques d'un haut-parleur (60), comprenant un dispositif de réception (30) pour la réception d'un corps en mousse (20), dans lequel le dispositif de réception (30) délimite au moins par zones un espace de réception (31) pour la réception du corps en mousse (20), ainsi qu'un corps en mousse (20) à agencer sur ou à proximité immédiate d'un haut-parleur (60), dans lequel le corps en mousse (20) est agencé dans l'espace de réception (31) du dispositif de réception (30) et une saillie (40) est agencée ou formée sur au moins l'un des deux éléments parmi le corps en mousse (20) et le dispositif de réception (30), faisant saillie en direction de l'autre élément respectif, laquelle saillie vient en prise dans un renfoncement dans l'autre élément respectif, de sorte que le corps en mousse (20) est fixé par complémentarité de forme et/ou par force dans l'espace de réception (31) du dispositif de réception (30), dans lequel la saillie (40) est agencée sur une paroi de délimitation latérale (32, 33) du dispositif de réception (30) délimitant l'espace de réception (31) et le corps en mousse (20) est agencé au voisinage de la paroi de délimitation latérale (32, 33) dans un plan d'agencement (51), de sorte que la saillie (40) pénètre dans le corps en mousse (20) en se déformant, **caractérisé en ce que** les bords de corps de la saillie (40) forment, au moins dans une zone d'extrémité tournée en direction du corps en mousse (20), un second angle aigu dans un second plan qui est orienté le long de l'extension longitudinale de la saillie (40) et sensiblement perpendiculaire à la paroi de délimitation latérale (32, 33) de l'espace de réception (31) ainsi que sensiblement parallèle au plan d'agencement (51).

2. Dispositif d'amortissement (10) selon la revendication précédente, **caractérisé en ce que** des bords de corps de la saillie (40) forment, au moins dans une zone d'extrémité tournée en direction du corps en mousse (20), un premier angle aigu dans un premier plan qui est orienté le long de la longueur de la saillie (40) et sensiblement perpendiculaire à la paroi de délimitation latérale (32, 33) de l'espace de réception (31) ainsi que sensiblement perpendiculaire au plan d'agencement (51).

3. Dispositif d'amortissement (10) selon l'une des revendications précédentes, **caractérisé en ce que** plusieurs saillies (40) sont agencées au moins sur une paroi de délimitation latérale (32, 33) de l'espace de réception (31).

4. Dispositif d'amortissement (10) selon l'une des revendications précédentes, **caractérisé en ce que** dans une surface de fond (34) du dispositif de réception (30) agencée sensiblement parallèlement au plan d'agencement (51), laquelle surface définit au moins par sections un plan d'appui, un évidement (35) est agencé en regard de la saillie (40) afin de faciliter le démoulage du dispositif de réception d'un moule de coulée.

5. Dispositif d'amortissement (10) selon l'une des revendications précédentes, **caractérisé en ce que** le côté de la saillie (40) opposé à une surface de fond (34) du dispositif de réception (30) agencée sensiblement parallèlement au plan d'agencement (51) forme un angle obtus (44) avec la paroi de délimitation latérale (32, 33) sur laquelle la saillie (40) est agencée, afin de faciliter l'insertion du corps en mousse (20) dans l'espace de réception (31).

6. Dispositif d'amortissement (10) selon l'une des revendications précédentes, **caractérisé en ce que** le côté de la saillie (40) faisant face vers une surface de fond (34) du dispositif de réception (30) agencée sensiblement parallèlement au plan d'agencement (51) forme un angle aigu (43) avec la paroi de délimitation latérale (32, 33) sur laquelle la saillie (40) est agencée, afin de réaliser une contre-dépouille qui s'oppose à un enlèvement du corps en mousse (20) de l'espace de réception (31).

7. Système d'amortissement de haut-parleur (70), comprenant un dispositif d'amortissement (10) selon l'une des revendications précédentes ainsi qu'un haut-parleur (60) qui est entouré au moins par sections par le corps en mousse (20) dans une zone périphérique.

8. Véhicule automobile comprenant au moins un dispositif d'amortissement (10) fixé sur un habillage du véhicule automobile, notamment sur l'habillage d'une portière de véhicule, ou formé par un tel habillage, selon l'une des revendications 1 à 6, ou au moins un système d'amortissement de haut-parleur (70) selon la revendication 7.
